# EUROPEAN PATENT SPECIFICATION

(11) **EP 3 524 800 B1**
(45) Date of publication and mention of the grant of the patent: **24.03.2021**
(21) Application number: 19155694.3
(22) Date of filing: 06.02.2019
(51) Int. Cl.: F02D 13/02, F02D 41/00, F02D 13/06, F02D 17/02, F01L 1/344, F01L 13/00

(54) **ENGINE CONTROLLER**
MOTORSTEUERGERÄT
ORGANE DE COMMANDE DE MOTEUR

(30) Priority: 09.02.2018 JP 2018022030
(43) Date of publication of application: 14.08.2019
(73) Proprietor: TOYOTA JIDOSHA KABUSHIKI KAISHA, Aichi-ken 471-8571 (JP)
(72) Inventor: NAKANO, Tomohiro, TOYOTA-SHI, AICHI-KEN, 471-8571 (JP)
(74) Representative: Cabinet Beau de Loménie

(56) References cited:
- EP-A1- 3 006 700
- US-A1- 2006 180 119
- US-A1- 2006 243 040
- US-A1- 2014 261 316
- US-B2- 7 260 467

## Description

### BACKGROUND

The present disclosure relates to an engine controller that performs cylinder deactivation by stopping the operation for opening and closing the intake and exhaust valves.

Japanese Laid-Open Patent Publication No. 11-336577 discloses an engine including a valve stopping mechanism that stops the operation for opening and closing and the intake and exhaust valves. In the engine, when a reduced-cylinder operation is performed to deactivate the combustion of some of the cylinders, the operation for opening and closing the intake and exhaust valves of the deactivated cylinders is stopped. Japanese Laid-Open Patent Publication No. 11-336577 also discloses that cylinder deactivation is performed with intake air enclosed in a deactivated cylinder in order to limit oil rising in the cylinder. This is performed by stopping only the operation for opening and closing the exhaust valve in the first combustion cycle after starting cylinder deactivation with the reduced-cylinder operation and by stopping the operation for opening and closing the intake valve from the second combustion cycle. Other documents relating to valve control during cylinder deactivation are US Patent No. 7260467, US Patent Application Publication Nos. US 2006/180119 and US 2006/243040, and European Patent Application Publication No. EP 3006700 A1.

U.S. Patent No. 9200575 discloses a technique for variably controlling the combustion cylinder ratio of an engine, which is the ratio of the number of combustion cylinders to the total of the number of combustion cylinders and the number of deactivated cylinders, by performing an intermittent combustion operation for intermittently performing cylinder deactivation. U.S. Patent No. 9200575 also discloses that various combustion cylinder ratios can be achieved by combining an intermittent combustion operation for fixing deactivated cylinders with an intermittent combustion operation for dynamically changing deactivated cylinders instead of fixing deactivated cylinders. That is, the combustion cylinder ratios that can be achieved by using a four-cylinder engine when only performing the intermittent combustion operation for fixing deactivated cylinders are only four combustion cylinder ratios, namely, 100% (4/4) with all the cylinders activated, 75% (3/4) with one cylinder deactivated, 50% (2/4) with two cylinders deactivated, and 25% (1/4) with three cylinders deactivated. When the intermittent combustion operation is performed by changing deactivated cylinders, combustion cylinder ratios other than the above-described four combustion cylinder ratios can be achieved. For example, the combustion cylinder ratio becomes 67% (2/3) when a pattern in which combustion is consecutively performed in two cylinders before the combustion of one cylinder is deactivated is repeated to perform the intermittent combustion operation while switching the cylinder subject to cylinder deactivation each time the pattern is repeated.

In some cases, as in the combustion cylinder ratio variable control disclosed in U.S. Patent No. 9200575, both a cylinder deactivation in which deactivated cylinders are fixed and a cylinder deactivation in which deactivated cylinders are not fixed are performed. The procedures of stopping the operation for opening and closing the intake and exhaust valves when the cylinder deactivation starts in Japanese Laid-Open Patent Publication No. 11-336577 require the reduced-cylinder operation to be performed with deactivated cylinders fixed. Thus, in the conventional technique, there is no proper valve stopping control in which both the cylinder deactivation in which deactivated cylinders are fixed and the cylinder deactivation in which deactivated cylinders are not fixed are performed by stopping the operation for opening and closing the intake and exhaust valves.

### SUMMARY

It is an object of the present disclosure to provide an engine controller that properly performs cylinder deactivation by stopping the operation for opening and closing the intake and exhaust valves.

An engine controller according to one aspect is configured to control an engine. The engine includes cylinders each provided with an intake valve and an exhaust valve and a valve stopping mechanism capable of stopping an operation for opening and closing the intake valve and the exhaust valve of each of the cylinders. The engine controller includes a cylinder deactivation control unit configured to execute cylinder deactivation in at least one of the cylinders and a valve stopping control unit configured to execute, during the execution of the cylinder deactivation, a valve stopping control to control the valve stopping mechanism for stopping the operation for opening and closing the intake valve and the exhaust valve of a deactivated cylinder subject to the cylinder deactivation. When performing the valve stopping control, the valve stopping control unit is configured to, in a case in which the cylinder deactivation control unit executes the cylinder deactivation with the deactivated cylinder fixed, stop the operation for opening and closing the exhaust valve of the deactivated cylinder from a first combustion cycle after starting the cylinder deactivation and stop the operation for opening and closing the intake valve of the deactivated cylinder from a second combustion cycle after starting the cylinder deactivation, such that cylinder deactivation is performed with intake air enclosed in the deactivated cylinder, and in a case in which the cylinder deactivation control unit executes the cylinder deactivation without fixing the deactivated cylinder, stop the operation for opening and closing both the intake valve and the exhaust valve of the deactivated cylinder from the first combustion cycle after starting the cylinder deactivation, such that cylinder deactivation is performed with the inside of the deactivated cylinder scavenged in the exhaust stroke immediately before starting the cylinder deactivation.

When stopping the operation for opening and closing the exhaust valve of the deactivated cylinder from a first combustion cycle after starting the cylinder deactivation and stopping the operation for opening and closing the intake valve of the deactivated cylinder from a second combustion cycle after starting the cylinder deactivation, cylinder deactivation is performed with intake air enclosed in a cylinder. This limits oil rising when cylinder deactivation is performed. However, in such a case, the intake air enclosed when combustion is resumed is emitted to the exhaust passage. This causes the exhaust gas to become lean and deteriorates the emission or requires fuel injection that does not contribute to the combustion in order to avoid the emission deterioration. Thus, when cylinder deactivation and combustion resumption are repeatedly performed at a high frequency, the cylinder deactivation performed with intake air enclosed in the cylinder causes considerable emission deterioration or increases in fuel consumption to avoid such emission deterioration. When cylinder deactivation is performed during a short period, the amount of oil rising during the deactivation is limited even without enclosing intake air in the deactivated cylinders. In the above-described engine controller, intake air is enclosed in deactivated cylinders to limit oil rising only when cylinder deactivation is performed with deactivated cylinders fixed, that is, when the same cylinders are consecutively deactivated. This allows cylinder deactivation to be properly performed by stopping the operation for opening and closing the intake valve and the exhaust valve.

An engine controller according to another aspect is configured to control an engine. The engine includes cylinders each provided with an intake valve and an exhaust valve, a valve stopping mechanism capable of stopping an operation for opening and closing the intake valve and the exhaust valve of each of the cylinders, and a variable valve mechanism that causes a timing of opening the exhaust valve to be variable. The engine controller includes a cylinder deactivation control unit configured to execute cylinder deactivation in at least one of the cylinders, a valve stopping control unit configured to execute, during the execution of the cylinder deactivation, a valve stopping control to control the valve stopping mechanism for stopping the operation for opening and closing the intake valve and the exhaust valve of a deactivated cylinder subject to the cylinder deactivation, and a valve-closing retardation control unit configured to execute a valve-closing retardation control for controlling the variable valve mechanism to retard a timing of closing the exhaust valve in a final operation for opening and closing the exhaust valve before stopping the operation for opening and closing the intake valve and the exhaust valve through the valve stopping control. The valve-closing retardation control unit is configured to execute the valve-closing retardation control when the cylinder deactivation control unit executes the cylinder deactivation with the deactivated cylinder fixed, such that the exhaust gas returns into the deactivated cylinder, causing cylinder deactivation to be performed with exhaust gas enclosed in the deactivated cylinder, and prohibit the valve-closing retardation control when the cylinder deactivation control unit executes the cylinder deactivation without fixing the deactivated cylinder, such that cylinder deactivation is performed with the inside of the deactivated cylinder scavenged in the exhaust stroke immediately before starting the cylinder deactivation.

To start cylinder deactivation, when stopping the operation for opening and closing the intake and exhaust valves after performing the operation for opening and closing the exhaust valve with the valve-closing timing retarded, cylinder deactivation is performed with exhaust gas enclosed in the cylinder. This limits oil rising in the deactivated cylinder. However, in such a case, the exhaust gas in the cylinder needs to be scavenged by taking in air and discharging gas. This disables immediate resumption of combustion. When cylinder deactivation is performed during a short period, the amount of oil rising during the deactivation is limited even without enclosing exhaust gas in the deactivated cylinder. In the above-described engine controller, intake air is enclosed in deactivated cylinders to limit oil rising only when cylinder deactivation is performed with deactivated cylinders fixed, that is, when the same cylinders are consecutively deactivated. This allows cylinder deactivation to be properly performed by stopping the operation for opening and closing the intake and exhaust valves.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferable embodiments together with the accompanying drawings in which:
Fig. 1 is a schematic diagram of an engine controller according to a first embodiment;
Fig. 2 is a block diagram illustrating the flow of processes of variably controlling a combustion cylinder ratio that are executed by the engine controller of Fig. 1;
Fig. 3 is a graph illustrating the relationship of a target combustion cylinder ratio, an engine rotation speed, and an all-cylinder combustion required load ratio that are set by the engine controller of Fig. 1;
Fig. 4 is a time chart illustrating how a valve stopping control is performed in a negative-pressure deactivation control mode in the engine controller of Fig. 1;
Fig. 5 is a time chart illustrating how the valve stopping control is performed in a positive-pressure deactivation control mode in the engine controller of Fig. 1;
Fig. 6 is a flowchart illustrating a stopping control mode selection routine executed by the engine controller of Fig. 1;
Fig. 7 is a block diagram illustrating the flow of processes of variably controlling a combustion cylinder ratio that are executed by an engine controller according to a second embodiment; and
Fig. 8 is a time chart illustrating how a valve stopping control and a valve-closing retardation control are performed in the positive-pressure deactivation control mode in the engine controller of Fig. 7.

### DETAILED DESCRIPTION

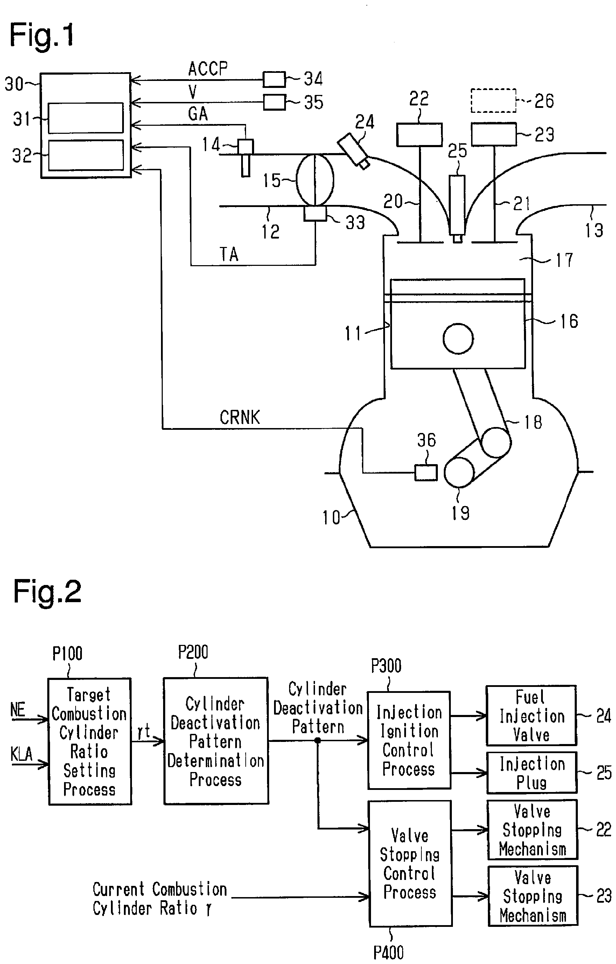

An engine controller according to a first embodiment will now be described in detail with reference to Figs. 1 to 6.

Fig. 1 illustrates an engine 10 configured as an onboard inline-four engine provided with four cylinders 11, one of which is shown in Fig. 1. In the following description, the four cylinders 11 are referred to as a cylinder #1, a cylinder #2, a cylinder #3, and a cylinder #4 to distinguish one from another. In the cylinders 11 of the engine 10, ignition is performed in the order of the cylinder #1, the cylinder #3, the cylinder #4, and the cylinder #2.

The engine 10 includes an intake passage 12 and an exhaust passage 13. Intake air flowing into each cylinder 11 flows through the intake passage 12. Exhaust gas discharged out of each cylinder 11 flows through the exhaust passage 13. The intake passage 12 includes an airflow meter 14 that detects the flow rate of intake air flowing into the intake passage 12 (intake air amount GA). The intake passage 12 also includes a throttle valve 15 that adjusts the intake air amount GA.

Each cylinder 11 of the engine 10 includes a piston 16 in a manner allowing for reciprocation of the piston 16. Each cylinder 11 further includes a combustion chamber 17 defined by the piston 16. The piston 16 of each cylinder 11 is coupled to a crankshaft 19, which is an output shaft of the engine 10, by a connecting rod 18 that converts reciprocating movement of the piston 16 into rotating movement.

Each cylinder 11 of the engine 10 also includes an intake valve 20 and an exhaust valve 21. When the intake valve 20 opens during the intake stroke, intake air is drawn into the combustion chamber 17 of each cylinder 11 from the intake passage 12. When the exhaust valve 21 opens during the exhaust stroke, exhaust gas is discharged out of the combustion chamber 17 to the exhaust passage 13. The valve system of the intake valve 20 includes an intake-side valve stopping mechanism 22 that can stop the operation for opening and closing the intake valve 20 in each cylinder. The valve system of the exhaust valve 21 includes an exhaust-side valve stopping mechanism 23 that can stop the operation for opening and closing the exhaust valve 21 in each cylinder.

Additionally, each cylinder 11 of the engine 10 includes a fuel injection valve 24 and an ignition plug 25. The fuel injection valve 24 injects fuel into the intake air drawn into the combustion chamber 17. The ignition plug 25 uses spark discharge to ignite the mixture of the intake air and fuel drawn into the combustion chamber 17.

The above-described engine 10 is controlled by an engine controller 30. The engine controller 30 includes a calculation processing circuit 31 that performs a calculation process for engine control and a storage device 32 that stores programs and data for engine control. The calculation processing circuit 31 performs various types of processes for engine control by reading and executing the programs stored in the storage device 32.

In addition to the airflow meter 14, a throttle sensor 33, an accelerator pedal sensor 34, and a vehicle-speed sensor 35 are connected to the engine controller 30. The throttle sensor 33 detects the open degree of the throttle valve 15 (throttle open degree TA), the accelerator pedal sensor 34 detects the depression amount of an accelerator pedal by the driver (accelerator operation amount ACCP), and the vehicle-speed sensor 35 detects the travelling speed of the vehicle (vehicle speed V). Further, a crank angle sensor 36 that outputs a pulsed crank signal CRNK in accordance with rotation of the crankshaft 19 is connected to the engine controller 30. The engine controller 30 calculates an engine rotation speed NE based on the crank signal CRNK. In addition, the engine controller 30 calculates a required torque TREQ, which is a required value of engine torque, based on the accelerator operation amount ACCP and the engine rotation speed NE.

As part of the engine control, the engine controller 30 performs a combustion cylinder ratio variable control for setting the combustion cylinder ratio of the engine 10 to be variable. The combustion cylinder ratio is the ratio of the number of cylinders in which combustion is performed (combustion cylinders) to the total of the number of combustion cylinders and the number of cylinders in which combustion is deactivated (deactivated cylinder). In an all-cylinder combustion operation for performing combustion in all the cylinders entering the combustion stroke, the combustion cylinder ratio is 100% (100% = 1). In an intermittent deactivation operation for deactivating combustion in some of the cylinders, the combustion cylinder ratio is a value less than 100%.

In the all-cylinder combustion operation, the fuel injection of the fuel injection valve 24 and the spark discharge of the ignition plug 25 are performed in each combustion cycle repeatedly in all the cylinders #1 to #4. In the intermittent deactivation operation, while a cylinder is not subject to intermittent deactivation, the fuel injection of the fuel injection valve 24 and the spark discharge of the ignition plug 25 in the cylinder are performed in each combustion cycle repeatedly. When a cylinder is subject to combustion deactivation, the fuel injection of the fuel injection valve 24 and the spark discharge of the ignition plug 25 in the cylinder are stopped in one combustion cycle. When the intermittent deactivation operation is performed, the operation for opening and closing the intake valve 20 and the exhaust valve 21 of a cylinder subject to combustion deactivation is stopped by the valve stopping mechanisms 22 and 23.

Fig. 2 shows the flow of processes of the combustion cylinder ratio variable control performed by the engine controller 30. As shown in Fig. 2, when performing the combustion cylinder ratio variable control, the engine controller 30 executes a target combustion cylinder ratio setting process P100, a cylinder deactivation pattern determination process P200, an injection ignition stopping control process P300, and a valve stopping control process P400. The target combustion cylinder ratio setting process P100 involves the setting of a target combustion cylinder ratio γt, which is the target value of the combustion cylinder ratio. The cylinder deactivation pattern determination process P200 involves the determination of a cylinder deactivation pattern in accordance with the target combustion cylinder ratio γt, which is set in the target combustion cylinder ratio setting process P100. In the engine control process P300, the fuel injection valve 24 and the ignition plug 25 are controlled so that combustion and deactivation are performed in each cylinder in accordance with the cylinder deactivation pattern, which is determined in the cylinder deactivation pattern determination process P200. In the valve stopping control process P400, the valve stopping mechanisms 22 and 23 are controlled so as to stop the operation for opening and closing the intake valve 20 and the exhaust valve 21 of a cylinder subject to combustion deactivation in the cylinder deactivation pattern, which is determined in the cylinder deactivation pattern determination process P200.

### Target Combustion Cylinder Ratio Setting Process

In the target combustion cylinder ratio setting process P100, the target combustion cylinder ratio γt is determined based on an all-cylinder combustion required load ratio KLA and the engine rotation speed NE. The all-cylinder combustion required load ratio KLA represents an engine load ratio KL necessary for generating torque by an amount of required torque when the engine 10 performs the all-cylinder combustion operation. The value of the all-cylinder combustion required load ratio KLA is calculated based on the engine rotation speed NE and the required torque TREQ. The engine load ratio KL represents the ratio of a cylinder inflow air amount to a maximum cylinder inflow air amount. The cylinder inflow air amount is an intake air amount per cycle of one cylinder. The maximum cylinder inflow air amount is a cylinder inflow air amount when the open degree of the throttle valve 15 is the maximum open degree.

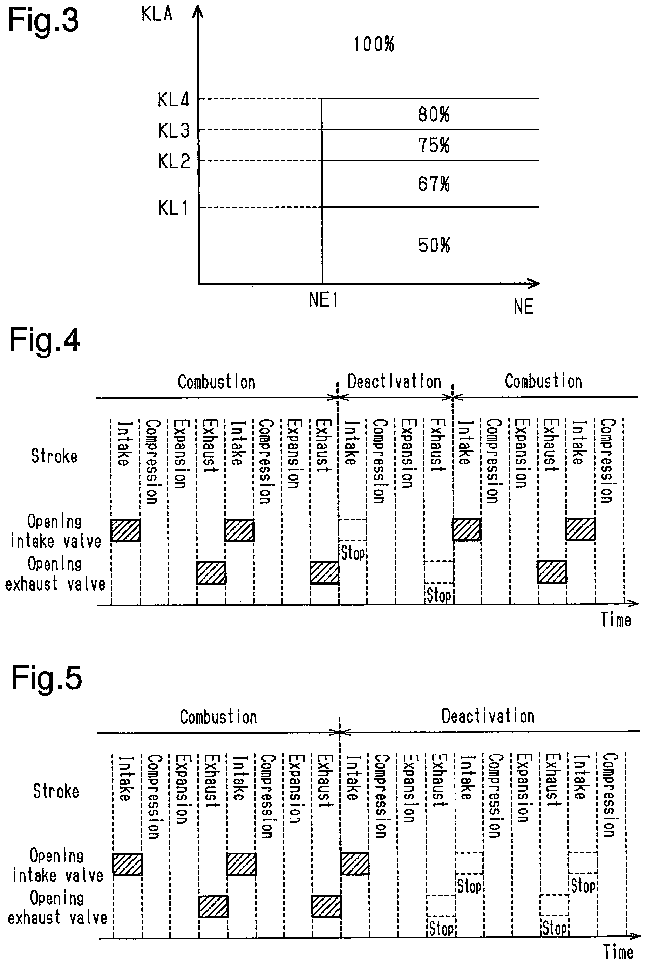

Fig. 3 shows the mode of setting the target combustion cylinder ratio γt in the present embodiment. In the present embodiment, the target combustion cylinder ratio γt is set to any of 0%, 50%, 67%, 75%, 80%, and 100%. As shown in Fig. 3, the value of the target combustion cylinder ratio γt is set to 100% in a region where the engine rotation speed NE is less than or equal to a preset value NE1 regardless of the all-cylinder combustion required load ratio KLA. The value of the target combustion cylinder ratio γt is variably set in a range from 50% to 100% in a region where the engine rotation speed NE exceeds the preset value NE1 in accordance with the all-cylinder combustion required load ratio KLA. More specifically, the target combustion cylinder ratio γt in the region where the engine rotation speed NE exceeds the preset value NE1 is set to 50% when the all-cylinder combustion required load ratio KLA is less than the preset value NE1 and set to 67% when the all-cylinder combustion required load ratio KLA is greater than or equal to the preset value NE1 and less than a preset value KL2 (KL2 > KL1). The target combustion cylinder ratio γt in the region where the engine rotation speed NE exceeds the preset value NE1 is set to 75% when the all-cylinder combustion required load ratio KLA is greater than or equal to the preset value KL2 and less than a preset value KL3 (KL3 > KL2), set to 80% when the all-cylinder combustion required load ratio KLA is greater than or equal to the preset value KL3 and less than a preset value KL4 (KL4 > KL3), and set to 100% when the all-cylinder combustion required load ratio KLA is greater than or equal to the preset value KL4.

When the speed of the vehicle is reduced, fuel cut-off is performed to temporarily stop the combustion of all the cylinders. When the fuel cut-off is performed, the value of the target combustion cylinder ratio yt is set to 0%.

### Cylinder Deactivation Pattern Determination Process

In the cylinder deactivation pattern determination process P200, a cylinder deactivation pattern that is to be performed subsequent to a cylinder deactivation pattern that is currently being performed is determined in accordance with the target combustion cylinder ratio γt. Table 1 shows the order of combustion and deactivation of the cylinders in cylinder deactivation patterns corresponding to the target combustion cylinder ratios γt of 0%, 50%, 67%, 75%, 80%, and 100%. The cylinder deactivation pattern corresponding to each of the four target combustion cylinder ratios γt, namely, 50%, 67%, 75%, and 80%, which are set when the intermittent combustion operation is performed, is a pattern in which combustion is consecutively performed in N cylinders in the order of cylinders entering the combustion stroke before the combustion of one cylinder 11 is deactivated.

In the cylinder deactivation patterns corresponding to the target combustion cylinder ratios γt of 67% and 80%, cylinders in which combustion is deactivated are changed each time the cylinder deactivation patterns are repeated. In the cylinder deactivation patterns corresponding to the target combustion cylinder ratios γt of 50% and 75%, cylinders in which combustion is deactivated are not changed by the repetition of the cylinder deactivation patterns. That is, in these cylinder deactivation patterns, as long as these cylinder deactivation patterns continue to be repeated, the same cylinders remain deactivated.

### Injection Ignition Stopping Control Process

As described above, in the injection ignition stopping control process P300, the fuel injection valve 24 and the ignition plug 25 are controlled so that combustion and deactivation are performed in each cylinder in accordance with the cylinder deactivation pattern determined in the cylinder deactivation pattern determination process P200. That is, the injection ignition stopping control process P300 involves the execution of the process of stopping the fuel injection of the fuel injection valve 24 of a cylinder subject to combustion deactivation (hereinafter referred to as deactivated cylinder) and the ignition of the ignition plug 25 until combustion of the cylinder is resumed.

### Valve Stopping Control Process

The valve stopping control process P400 performs the valve stopping control to stop the operation for opening and closing the intake valve 20 and the exhaust valve 21 of a deactivated cylinder in accordance with the cylinder deactivation pattern determined in the cylinder deactivation pattern determination process P200. The valve stopping control includes two control modes, namely, a negative-pressure deactivation control mode and a positive-pressure deactivation control mode, as control modes for stopping the operation for opening and closing the intake valve 20 and the exhaust valve 21 when starting cylinder deactivation.

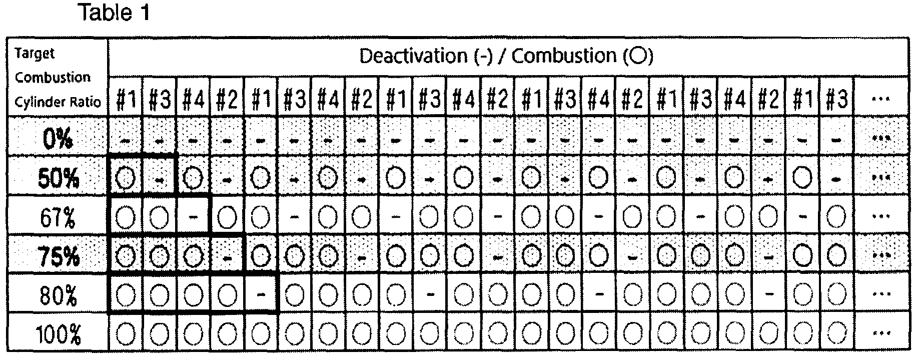

Fig. 4 shows how the valve stopping control is performed in the negative-pressure deactivation control mode. Fig. 4 shows how the operation for opening and closing the intake valve 20 and the exhaust valve 21 is performed prior to and subsequent to cylinder deactivation in a cylinder in which valve stopping is performed in the negative-pressure deactivation control mode to perform the cylinder deactivation in one combustion cycle before combustion is resumed.

In the negative-pressure deactivation control mode, the operation for opening and closing both the intake valve 20 and the exhaust valve 21 of a deactivated cylinder is stopped from the first combustion cycle after starting cylinder deactivation. In this case, cylinder deactivation is performed with the inside of the cylinder 11 scavenged in the exhaust stroke immediately before starting the cylinder deactivation. Thus, in the deactivated cylinder in which deactivation is started in the negative-pressure deactivation control mode, the pressure in the cylinder 11 becomes negative as the piston 16 falls in the intake stroke and the expansion stroke during the cylinder deactivation.

Fig. 5 shows how the valve stopping control is performed in the positive-pressure deactivation control mode. Fig. 5 shows how the operation for opening and closing the intake valve 20 and the exhaust valve 21 is performed prior to and subsequent to cylinder deactivation in a cylinder in which valve stopping is performed in the positive-pressure deactivation control mode so that cylinder deactivation is continuously performed in the cylinder.

In the positive-pressure control mode, the operation for opening and closing the exhaust valve 21 of a deactivated cylinder is stopped from the first combustion cycle after cylinder deactivation is started. The operation for opening and closing the intake valve 20 of the deactivated cylinder is stopped from the second combustion cycle after starting the cylinder deactivation. In such a case, in the first combustion cycle after starting the cylinder deactivation, the operation for opening and closing the intake valve 20 is performed so that intake air is drawn into the cylinder 11. The cylinder deactivation is performed with the intake air enclosed. This limits decreases in the pressure in the cylinder 11 that occur as the piston 16 falls to a greater extent when deactivation is started in the positive-pressure control mode than when deactivation is started in the negative-pressure control mode.

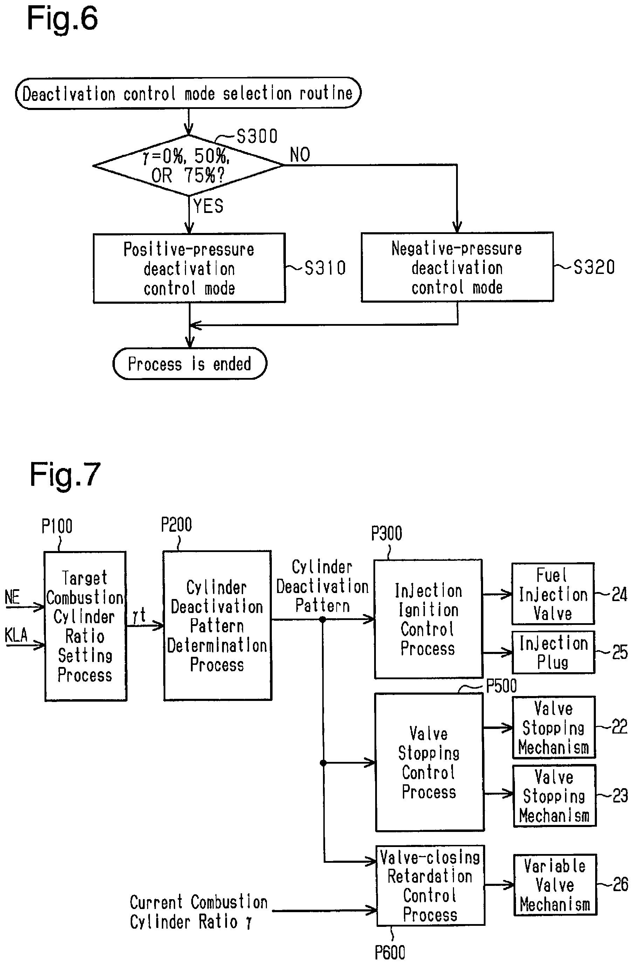

Fig. 6 shows the flowchart of a deactivation control mode selection routine for selecting the control mode when cylinder deactivation is started in the valve stopping control process P400. This routine is performed by the engine controller 30 when cylinder deactivation is started.

When the deactivation control mode selection routine is started, it is determined first in step S300 whether the current combustion cylinder ratio γ is 0%, 50%, or 75%. When the combustion cylinder ratio γ is 0%, combustion is deactivated in all the cylinders. When the combustion cylinder ratio γ is 50% or 75%, an intermittent combustion operation is performed with deactivated cylinders changed. That is, in these cases, cylinder deactivation is performed without fixing deactivated cylinders. In these cases, i.e., when the combustion cylinder ratio γ is 0%, 50%, or 75% (S300: YES), the positive-pressure deactivation control mode is selected as the control mode for starting cylinder deactivation (S310).

When the combustion cylinder ratio γ is 67% or 80%, an intermittent combustion operation is performed while changing deactivated cylinders each time the cylinder deactivation pattern is repeated. In this case, i.e., when the combustion cylinder ratio γ is 67% or 80% (S300: NO), the negative-pressure deactivation control mode is selected as the control mode for starting cylinder deactivation (S320).

When resuming the combustion of a cylinder deactivated by the positive-pressure deactivation control mode, it is desired that the operation for opening and closing the exhaust valve 21 be resumed from the exhaust stroke of a deactivated cylinder immediately before combustion is resumed so that the intake air enclosed in the cylinder is scavenged before the combustion is resumed. In such a case, scavenging the intake air causes the exhaust gas of the exhaust passage 13 to become lean. When the emission deterioration resulting from such leaning of exhaust gas is intolerable, the leaning of exhaust gas can be limited by performing fuel injection that does not contribute to the combustion, for example, fuel injection on deactivated cylinders.

### Operation and Advantages of Present Embodiment

The operation and advantages of the present embodiment will now be described.

When the positive-pressure control mode is used to start cylinder deactivation, the cylinder deactivation is performed with intake air enclosed in each cylinder 11. This limits decreases in the pressure in the deactivated cylinder 11 and limits oil rising in the combustion chamber 17 caused by the negative pressure in the cylinder. However, in such a case, the intake air enclosed when combustion is resumed is emitted to the exhaust passage 13. This causes the exhaust gas to become lean and deteriorates the emission or requires fuel injection that does not contribute to the combustion in order to avoid the emission deterioration. Thus, when cylinder deactivation and combustion resumption are repeatedly performed at a high frequency, the cylinder deactivation performed with intake air enclosed in the cylinder causes considerable emission deterioration or increases in fuel consumption to avoid such emission deterioration. When cylinder deactivation is performed during a short period, the amount of oil rising during the deactivation is limited even without enclosing intake air in the deactivated cylinders. In the engine controller 30 of the present embodiment, intake air is enclosed in deactivated cylinders to limit oil rising only when cylinder deactivation is performed with deactivated cylinders fixed, that is, when the same cylinders are consecutively deactivated. This allows cylinder deactivation to be properly performed by stopping the operation for opening and closing the intake valve 20 and the exhaust valve 21.

### Second Embodiment

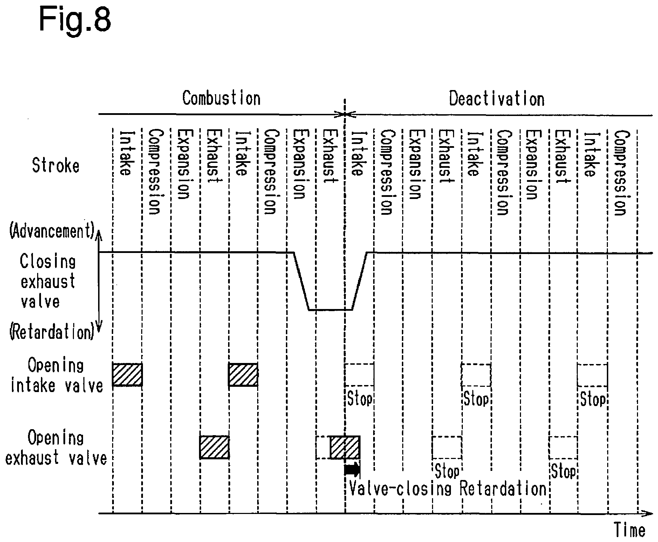

An engine controller according to a second embodiment will now be described in detail with reference to Figs. 7 and 8. In the second embodiment, like or same reference numerals are given to those components that are the same as the corresponding components of the first embodiment. Such components will not be described in detail. In the second embodiment, the engine 10 includes a variable valve mechanism 26, which is shown by the dotted line in Fig. 1. The variable valve mechanism 26 is arranged at the valve system of the exhaust valve 21 to cause the timing of opening and closing the exhaust valve 21 to be variable. The exhaust valve 21 of each cylinder 11 is opened and closed by receiving pressing force of the cam of an exhaust-side camshaft (not shown) that is rotated by rotation of the crankshaft 19. In the second embodiment, the variable valve mechanism 26 is employed as a mechanism that evenly changes the timing of opening and closing the exhaust valve 21 of each cylinder 11 by changing the rotation phase of the exhaust-side camshaft relative to the rotation phase of the crankshaft 19.

Fig. 7 shows the flow of processes for variably controlling a combustion cylinder ratio in the engine controller of the second embodiment. As shown in Fig. 7, when variably controlling the combustion cylinder ratio, the engine controller of the second embodiment executes the target combustion cylinder ratio setting process P100, the cylinder deactivation pattern determination process P200, and the injection ignition stopping control process P300 in the same manner as the first embodiment. Further, the engine control of the second embodiment includes the execution of a valve stopping control process P500 and a valve-closing retardation control process P600 when variably controlling the combustion cylinder ratio.

In the valve stopping control process P500 of the present embodiment, regardless of the current combustion cylinder ratio γ, the operation for opening and closing the intake valve 20 and the exhaust valve 21 is stopped from the first combustion stroke after starting cylinder deactivation. In the second embodiment, in the valve-closing retardation control process P600 instead of the valve stopping control process P500, the deactivation control mode selection routine in Fig. 6 is used to select the deactivation control mode. In the valve-closing retardation control process P600, only when the positive-pressure deactivation control mode is selected, a valve-closing retardation control is executed to control the variable valve mechanism 26 in order to retard the timing of opening the exhaust valve 21 in the exhaust stroke of a deactivated cylinder immediately before starting cylinder deactivation.

Fig. 8 shows how the engine controller of the second embodiment performs the valve stopping control and the valve-closing retardation control in the pressure-positive deactivation control mode. Fig. 8 shows how the operation for opening and closing the intake valve 20 and the exhaust valve 21 is performed prior to and subsequent to cylinder deactivation in a cylinder in which valve stopping is performed in the positive-pressure deactivation control mode so that cylinder deactivation is continuously performed in the cylinder.

As shown in Fig. 8, in the positive-pressure control mode, the timing of closing the exhaust valve 21 in the final operation for opening and closing the exhaust valve 21 before stopping the operation for opening and closing the intake valve 20 and the exhaust valve 21 is retarded to the intake stroke. Then, the operation for opening and closing both the intake valve 20 and the exhaust valve 21 of a deactivated cylinder is stopped from the first combustion cycle after starting the cylinder deactivation. As a result, the exhaust gas returns into the cylinder, causing cylinder deactivation to be performed with the exhaust gas enclosed in the cylinder. This limits the pressure loss in the deactivated cylinder and consequently limits oil rising in the deactivated cylinder. In the negative-pressure control mode, the valve-closing retardation control is not performed, that is, the valve-closing retardation control is prohibited, and the valve stopping control is performed in the same manner as the first embodiment, which is shown in Fig. 4.

When cylinder deactivation is performed in the positive-pressure deactivation mode, in order to avoid the deterioration of combustion caused by the resumption of the combustion in a state in which exhaust gas remains in the cylinder, it is desired that the operation for opening and closing the intake valve 20 and the exhaust valve 21 be resumed prior to resuming the combustion to scavenge the exhaust gas in the cylinder. When cylinder deactivation in the cylinder is ended only in one combustion cycle, there is no opportunity to scavenge the exhaust gas enclosed in the cylinder. This makes it difficult to avoid the deterioration of combustion when the combustion is resumed. When cylinder deactivation is performed during a short period, the amount of gas rising during the deactivation is limited even without enclosing intake air in the deactivated cylinders. In the engine controller of the second embodiment, only when the combustion cylinder ratio γ is any one of 0%, 50%, and 75% and cylinder deactivation is performed with deactivated cylinders fixed, that is, only when the same cylinders are consecutively deactivated, the exhaust gas is enclosed in the deactivated cylinders to limit oil rising. Thus, cylinder deactivation can be properly performed by stopping the operation for opening and closing the intake valve 20 and the exhaust valve 21.

It should be apparent to those skilled in the art that the present disclosure may be embodied in many other specific forms without departing from the scope of the disclosure. Particularly, it should be understood that the present disclosure may be embodied in the following forms.

In the second embodiment, the variable valve mechanism 26 is used as a mechanism that causes the timing of closing the exhaust valve 21 to be variable by changing the rotation phase of the camshaft. Instead, even when using other types of variable valve mechanisms such as a mechanism that causes the timing of closing the exhaust valve 21 to be variable by changing the lifting period of the exhaust valve 21, cylinder deactivation can be properly executed in the same manner as the second embodiment as long as the valve-closing retardation control of the second embodiment is performed.

In the above-described embodiment, the variable control of the combustion cylinder ratio is performed to achieve six types of combustion cylinder ratios γ, namely, 0%, 50%, 67%, 75%, 80%, and 100%. However, the variable control may be performed to achieve other combustion cylinder ratios γ.

In some cases, when performing the reduced-cylinder operation in which some of the cylinders in the engine are deactivated, the reduced-cylinder operation with a cylinder deactivation in which deactivated cylinders are fixed and the reduced-cylinder operation with a cylinder deactivation in which deactivated cylinders are not fixed are switched depending on the running state of the engine (refer to, for example, Japanese Laid-Open Patent Publication No. 11-336577). Even in such a case, the cylinder deactivation by stopping the operation for opening and closing the intake and exhaust valves can be properly performed through the cylinder deactivation in the positive-pressure deactivation control mode when performing the reduced-cylinder operation by fixing deactivated cylinders and through the cylinder deactivation in the negative-pressure deactivation control mode when performing the reduced-cylinder operation without fixing deactivated cylinders.

In the above-described embodiment, the engine controller 30 does not have to be a device that includes a CPU and a ROM and executes software processing. For example, at least part of the processes executed by the software in the above-described embodiment may be executed by hardware circuits dedicated to executing these processes (such as ASIC). That is, the engine controller 30 may be modified as long as it has any one of the following configurations (a) to (c). (a) A configuration including a processor that executes all of the above-described processes according to programs and a program storage device such as a ROM that stores the programs. (b) A configuration including a processor and a program storage device that execute part of the above-described processes according to the programs and a dedicated hardware circuit that executes the remaining processes. (c) A configuration including a dedicated hardware circuit that executes all of the above-described processes. There may be one or more software processing circuits each including a processor and a program storage device and one or more dedicated hardware circuits. That is, the above processes may be executed in any manner as long as the processes are executed by processing circuitry that includes at least one of a set of one or more software processing circuits and a set of one or more dedicated hardware circuits.

Therefore, the present examples and embodiments are to be considered as illustrative and not restrictive and the disclosure is not to be limited to the details given herein, but may be modified within the scope of the invention as defined by the appended claims.

## Claims

1. An engine controller (30) configured to control an engine (10), the engine (10) including
cylinders (11) each provided with an intake valve (20) and an exhaust valve (21), and
a valve stopping mechanism (22, 23) capable of stopping an operation for opening and closing the intake valve (20) and the exhaust valve (21) of each of the cylinders (11),
the engine controller (30) comprising:
a cylinder deactivation control unit configured to execute cylinder deactivation in at least one of the cylinders (11); and
a valve stopping control unit configured to execute, during the execution of the cylinder deactivation, a valve stopping control to control the valve stopping mechanism (22, 23) for stopping the operation for opening and closing the intake valve (20) and the exhaust valve (21) of a deactivated cylinder subject to the cylinder deactivation,
wherein the valve stopping control unit is configured to stop the operation for opening and closing the exhaust valve (21) of the deactivated cylinder from a first combustion cycle after starting the cylinder deactivation and stop the operation for opening and closing the intake valve (21) of the deactivated cylinder from a second combustion cycle after starting the cylinder deactivation, such that cylinder deactivation is performed with intake air enclosed in the deactivated cylinder, when performing the valve stopping control in a case in which the cylinder deactivation control unit executes the cylinder deactivation with the deactivated cylinder fixed; and
wherein the valve stopping control unit is configured to stop the operation for opening and closing both the intake valve (20) and the exhaust valve (21) of the deactivated cylinder from the first combustion cycle after starting the cylinder deactivation, such that cylinder deactivation is performed with the inside of the deactivated cylinder scavenged in the exhaust stroke immediately before starting the cylinder deactivation, when performing the valve stopping control in a case in which the cylinder deactivation control unit executes the cylinder deactivation without fixing the deactivated cylinder.

2. An engine controller (30) configured to control an engine (10), the engine (10) including
cylinders (11) each provided with an intake valve (20) and an exhaust valve (21),
a valve stopping mechanism (22, 23) capable of stopping an operation for opening and closing the intake valve (20) and the exhaust valve (21) of each of the cylinders (11), and
a variable valve mechanism (26) that causes a timing of opening the exhaust valve (21) to be variable,
the engine controller (30) comprising:
a cylinder deactivation control unit configured to execute cylinder deactivation in at least one of the cylinders (11);
a valve stopping control unit configured to execute, during the execution of the cylinder deactivation, a valve stopping control to control the valve stopping mechanism (22, 23) for stopping the operation for opening and closing the intake valve (20) and the exhaust valve (21) of a deactivated cylinder subject to the cylinder deactivation; and
a valve-closing retardation control unit configured to execute a valve-closing retardation control for controlling the variable valve mechanism (26) to retard a timing of closing the exhaust valve (21) in a final operation for opening and closing the exhaust valve (21) before stopping the operation for opening and closing the intake valve (20) and the exhaust valve (21) through the valve stopping control,
wherein the valve-closing retardation control unit is configured to:
execute the valve-closing retardation control, such that the exhaust gas returns into the deactivated cylinder, causing cylinder deactivation to be performed with the exhaust gas enclosed in the deactivated cylinder, when the cylinder deactivation control unit executes the cylinder deactivation with the deactivated cylinder fixed; and
wherein the valve-closing retardation control unit is configured to:
prohibit the valve-closing retardation control, such that cylinder deactivation is performed with the inside of the deactivated cylinder scavenged in the exhaust stroke immediately before starting the cylinder deactivation, when the cylinder deactivation control unit executes the cylinder deactivation without fixing the deactivated cylinder.

3. The engine controller (30) according to claim 1 or 2, wherein the cylinder deactivation control unit (31) is configured to execute an intermittent cylinder deactivation in order to cause a combustion cylinder ratio of the engine (10) to be variable.

## Patentansprüche

1. Motorsteuergerät (30), das dazu ausgestaltet ist, einen Motor (10) zu steuern, wobei der Motor (10) umfasst:
Zylinder (11), die jeweils mit einem Einlassventil (20) und einem Auslassventil (21) versehen sind, und
einen Ventilstoppmechanismus (22, 23), der in der Lage ist, einen Vorgang zum Öffnen und Schließen des Einlassventils (20) und des Auslassventils (21) von jedem der Zylinder (11) zu stoppen,
wobei das Motorsteuergerät (30) umfasst:
eine Zylinderdeaktivierungs-Steuereinheit, die dazu ausgestaltet ist, eine Zylinderdeaktivierung in mindestens einem der Zylinder (11) auszuführen, und
eine Ventilstopp-Steuereinheit, die dazu ausgestaltet ist, während der Ausführung der Zylinderdeaktivierung eine Ventilstoppsteuerung auszuführen, um den Ventilstoppmechanismus (22, 23) zum Stoppen des Vorgangs zum Öffnen und Schließen des Einlassventils (20) und des Auslassventils (21) eines deaktivierten Zylinders, welcher der Zylinderdeaktivierung unterliegt, zu steuern,
wobei die Ventilstopp-Steuereinheit dazu ausgestaltet ist, den Vorgang zum Öffnen und Schließen des Auslassventils (21) des deaktivierten Zylinders von einem ersten Verbrennungszyklus nach dem Starten der Zylinderdeaktivierung zu stoppen und den Vorgang zum Öffnen und Schließen des Einlassventils (21) des deaktivierten Zylinders von einem zweiten Verbrennungszyklus nach dem Starten der Zylinderdeaktivierung zu stoppen, so dass eine Zylinderdeaktivierung mit in dem deaktivierten Zylinder eingeschlossener Ansaugluft durchgeführt wird, wenn die Ventilstoppsteuerung in einem Fall durchgeführt wird, in dem die Zylinderdeaktivierungs-Steuereinheit die Zylinderdeaktivierung mit dem fixierten deaktivierten Zylinder ausführt, und
wobei die Ventilstopp-Steuereinheit dazu ausgestaltet ist, den Vorgang zum Öffnen und Schließen sowohl des Einlassventils (20) als auch des Auslassventils (21) des deaktivierten Zylinders von dem ersten Verbrennungszyklus nach dem Starten der Zylinderdeaktivierung zu stoppen, so dass eine Zylinderdeaktivierung durchgeführt wird, wobei unmittelbar vor dem Starten der Zylinderdeaktivierung das Innere des deaktivierten Zylinders in dem Auslasshub durchgespült wird, wenn die Ventilstoppsteuerung in einem Fall durchgeführt wird, in dem die Zylinderdeaktivierungs-Steuereinheit die Zylinderdeaktivierung ausführt, ohne den deaktivierten Zylinder zu fixieren.

2. Motorsteuergerät (30), das dazu ausgestaltet ist, einen Motor (10) zu steuern, wobei der Motor (10) umfasst:
Zylinder (11), die jeweils mit einem Einlassventil (20) und einem Auslassventil (21) versehen sind,
einen Ventilstoppmechanismus (22, 23), der in der Lage ist, einen Vorgang zum Öffnen und Schließen des Einlassventils (20) und des Auslassventils (21) von jedem der Zylinder (11) zu stoppen, und
einen variablen Ventilmechanismus (26), der bewirkt, dass ein Zeitpunkt des Öffnens des Auslassventils (21) variabel ist,
wobei das Motorsteuergerät (30) umfasst:
eine Zylinderdeaktivierungs-Steuereinheit, die dazu ausgestaltet ist, eine Zylinderdeaktivierung in mindestens einem der Zylinder (11) auszuführen,
eine Ventilstopp-Steuereinheit, die dazu ausgestaltet ist, während der Ausführung der Zylinderdeaktivierung eine Ventilstoppsteuerung auszuführen, um den Ventilstoppmechanismus (22, 23) zum Stoppen des Vorgangs zum Öffnen und Schließen des Einlassventils (20) und des Auslassventils (21) eines deaktivierten Zylinders, welcher der Zylinderdeaktivierung unterliegt, zu steuern, und
eine Ventilschließverzögerungs-Steuereinheit, die dazu ausgestaltet ist, eine Ventilschließverzögerungssteuerung zum Steuern des variablen Ventilmechanismus (26) auszuführen, um einen Zeitpunkt des Schließens des Auslassventils (21) in einem abschließenden Vorgang zum Öffnen und Schließen des Auslassventils (21) vor dem Stoppen des Vorgangs zum Öffnen und Schließen des Einlassventils (20) und des Auslassventils (21) durch die Ventilstoppsteuerung zu verzögern,
wobei die Ventilschließverzögerungs-Steuereinheit ausgestaltet ist zum:
Ausführen der Ventilschließverzögerungssteuerung, so dass das Abgas in den deaktivierten Zylinder zurückkehrt, wodurch bewirkt wird, dass eine Zylinderdeaktivierung mit dem in dem deaktivierten Zylinder eingeschlossenen Abgas durchgeführt wird, wenn die Zylinderdeaktivierungs-Steuereinheit die Zylinderdeaktivierung mit dem fixierten deaktivierten Zylinder ausführt, und
wobei die Ventilschließverzögerungs-Steuereinheit ausgestaltet ist zum:
Verhindern der Ventilschließverzögerungssteuerung, so dass eine Zylinderdeaktivierung durchgeführt wird, wobei unmittelbar vor dem Starten der Zylinderdeaktivierung das Innere des deaktivierten Zylinders in dem Auslasshub durchgespült wird, wenn die Zylinderdeaktivierungs-Steuereinheit die Zylinderdeaktivierung ausführt, ohne den deaktivierten Zylinder zu fixieren.

3. Motorsteuergerät (30) nach Anspruch 1 oder 2, wobei die Zylinderdeaktivierungs-Steuereinheit (31) dazu ausgestaltet ist, eine intermittierende Zylinderdeaktivierung auszuführen, um zu bewirken, dass ein Verbrennungszylinderverhältnis des Motors (10) variabel ist.

## Revendications

1. Dispositif de commande de moteur (30) configuré pour commander un moteur (10), le moteur (10) comprenant
des cylindres (11) pourvus chacun d'une soupape d'admission (20) et d'une soupape d'échappement (21), et
un mécanisme d'arrêt de soupape (22, 23) capable d'arrêter une opération d'ouverture et de fermeture de la soupape d'admission (20) et de la soupape d'échappement (21) de chacun des cylindres (11),
le dispositif de commande de moteur (30) comprenant :
une unité de commande de désactivation de cylindre configurée pour exécuter une désactivation de cylindre dans au moins un des cylindres (11) ; et
une unité de commande d'arrêt de soupape configurée pour exécuter, pendant l'exécution de la désactivation de cylindre, une commande d'arrêt de soupape pour commander le mécanisme d'arrêt de soupape (22, 23) pour arrêter l'opération d'ouverture et de fermeture de la soupape d'admission (20) et de la soupape d'échappement (21) d'un cylindre désactivé sujet à la désactivation de cylindre,
l'unité de commande d'arrêt de soupape étant configurée pour arrêter l'opération d'ouverture et de fermeture de la soupape d'échappement (21) du cylindre désactivé à partir d'un premier cycle de combustion après avoir commencé la désactivation de cylindre et pour arrêter l'opération d'ouverture et de fermeture de la soupape d'admission (21) du cylindre désactivé à partir d'un deuxième cycle de combustion après avoir commencé la désactivation de cylindre, de telle sorte qu'une désactivation de cylindre est réalisée avec de l'air d'admission enfermé dans le cylindre désactivé, lors de la réalisation de la commande d'arrêt de soupape dans un cas dans lequel l'unité de commande de désactivation de cylindre exécute la désactivation de cylindre avec le cylindre désactivé fixé ; et
l'unité de commande d'arrêt de soupape étant configurée pour arrêter l'opération d'ouverture et de fermeture à la fois de la soupape d'admission (20) et de la soupape d'échappement (21) du cylindre désactivé à partir du premier cycle de combustion après avoir commencé la désactivation de cylindre, de telle sorte qu'une désactivation de cylindre est réalisée avec l'intérieur du cylindre désactivé balayé dans la course d'échappement immédiatement avant de commencer la désactivation de cylindre, lors de la réalisation de la commande d'arrêt de soupape dans un cas dans lequel l'unité de commande de désactivation de cylindre exécute la désactivation de cylindre sans fixer le cylindre désactivé.

2. Dispositif de commande de moteur (30) configuré pour commander un moteur (10), le moteur (10) comprenant
des cylindres (11) pourvus chacun d'une soupape d'admission (20) et d'une soupape d'échappement (21),
un mécanisme d'arrêt de soupape (22, 23) capable d'arrêter une opération d'ouverture et de fermeture de la soupape d'admission (20) et de la soupape d'échappement (21) de chacun des cylindres (11), et
un mécanisme de soupape variable (26) qui amène un calage d'ouverture de la soupape d'échappement (21) à être variable,
le dispositif de commande de moteur (30) comprenant :
une unité de commande de désactivation de cylindre configurée pour exécuter une désactivation de cylindre dans au moins un des cylindres (11) ; et
une unité de commande d'arrêt de soupape configurée pour exécuter, pendant l'exécution de la désactivation de cylindre, une commande d'arrêt de soupape pour commander le mécanisme d'arrêt de soupape (22, 23) pour arrêter l'opération d'ouverture et de fermeture de la soupape d'admission (20) et de la soupape d'échappement (21) d'un cylindre désactivé sujet à la désactivation de cylindre ; et
une unité de commande de retard de fermeture de soupape configurée pour exécuter une commande de retard de fermeture de soupape pour commander le mécanisme de soupape variable (26) pour retarder un calage de fermeture de la soupape d'échappement (21) dans une opération finale d'ouverture et de fermeture de la soupape d'échappement (21) avant d'arrêter l'opération d'ouverture et de fermeture de la soupape d'admission (20) et de la soupape d'échappement (21) par l'intermédiaire de la commande d'arrêt de soupape,
l'unité de commande de retard de fermeture de soupape étant configurée pour :
exécuter la commande de retard de fermeture de soupape, de telle sorte que le gaz d'échappement retourne dans le cylindre désactivé, ce qui amène une désactivation de cylindre à être réalisée avec le gaz d'échappement enfermé dans le cylindre désactivé, quand l'unité de commande de désactivation de cylindre exécute la désactivation de cylindre avec le cylindre désactivé fixé ; et
l'unité de commande de retard de fermeture de soupape étant configurée pour :
interdire la commande de retard de fermeture de soupape, de telle sorte qu'une désactivation de cylindre est réalisée avec l'intérieur du cylindre désactivé balayé dans la course d'échappement immédiatement avant de commencer la désactivation de cylindre, quand l'unité de commande de désactivation de cylindre exécute la désactivation de cylindre sans fixer le cylindre désactivé.

3. Dispositif de commande de moteur (30) selon la revendication 1 ou 2, dans lequel l'unité de commande de désactivation de cylindre (31) est configurée pour exécuter une désactivation de cylindre intermittente afin d'amener un rapport de cylindre de combustion du moteur (10) à être variable.
